# EUROPÄISCHE PATENTSCHRIFT

(11) **EP 2 820 944 B1**
(45) Veröffentlichungstag und Bekanntmachung des Hinweises auf die Patenterteilung: **21.11.2018**
(21) Anmeldenummer: 14002229.4
(22) Anmeldetag: 30.06.2014
(51) Int. Cl.: E04H 5/08, A01K 31/16, A01K 1/00

(54) **Dachkonstruktion für eine Stallanlage, insbesondere für Legenester**
Roof construction for a stall structure, in particular for laying nests
Structure de toit pour une étable, en particulier pour des pondoirs

(30) Priorität: 03.07.2013 DE 202013005957 U
(43) Veröffentlichungstag der Anmeldung: 07.01.2015
(73) Patentinhaber: Fienhage, Hans-Jürgen, 49424 Lutten (DE)
(72) Erfinder: Rensing, Frank, 49429 Visbek (DE); Fienhage, Hans-Jürgen, 49424 Lutten (DE)
(74) Vertreter: Heiland, Karsten

(56) Entgegenhaltungen:
- DE-U1-202012 100 137
- US-A- 2 640 220
- US-A- 5 544 622
- US-A1- 2008 173 250

## Beschreibung

Die Erfindung betrifft eine Dachkonstruktion für eine Stallanlage, insbesondere für Legenester, mit mindestens einer Dachlage.

Legenester für Hennen sind unter anderem auch oberseitig abgedeckt. Bei der Abdeckung kann es sich beispielsweise um eine oder mehrere, vorzugsweise biegesteife Dachlagen handeln. Je nach Innen- bzw. Außentemperatur ist eine Lüftung der Legenester oder eine Wärmeabfuhr aus denselben sinnvoll.

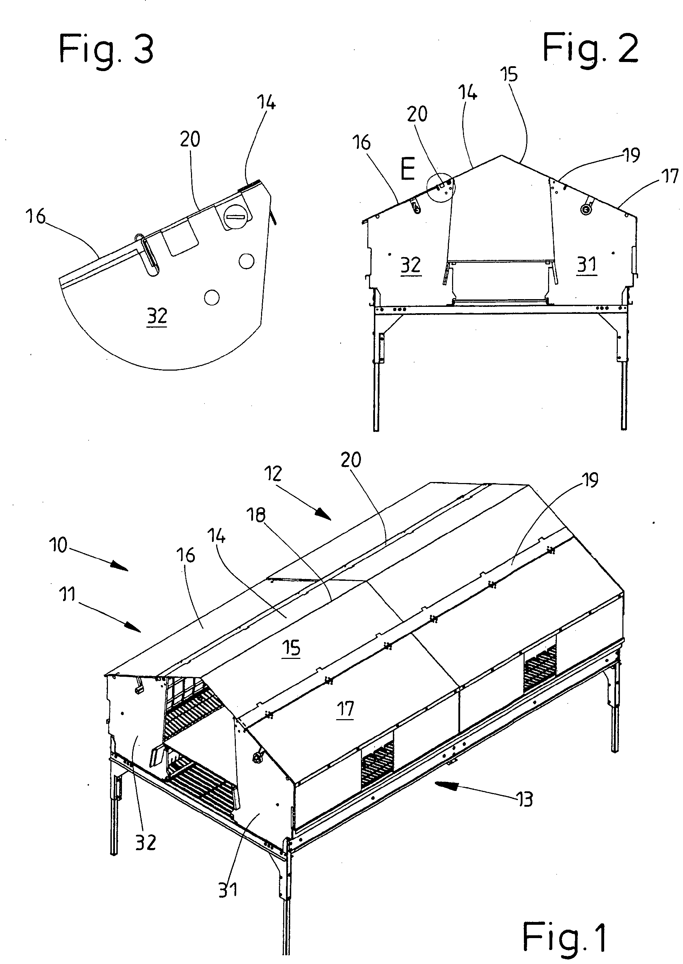

Die US 5,544,622 offenbart einen Viehstall mit einem anhebbaren Dachbereich entlang des Firstes. Tragorgane für den Dachbereich sind gemäß Fig. 1 zueinander parallele Blechstreifen.

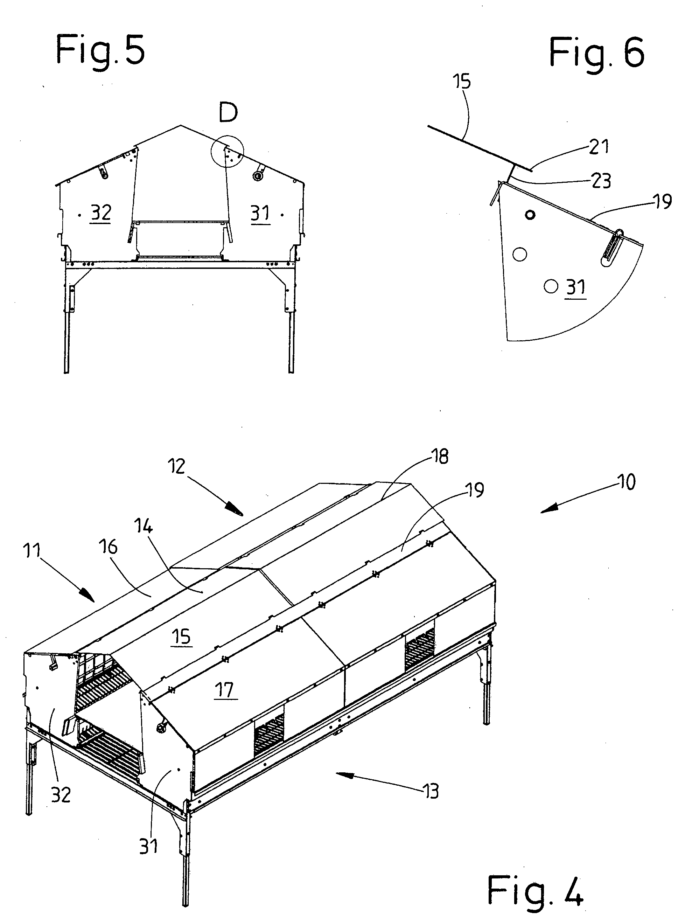

In der DE 20 2012 100 137 U1 ist eine Satteldachkonstruktion für Ställe mit einer schwenkbar ausgebildeten Dachfläche gezeigt, siehe insbesondere Fig. 4.

Eine Nestkonstruktion mit teilweise anhebbarer Dachfläche zeigt die US 2008/0173250 A1.

Schließlich zeigt die US 2,640,220 ein Geflügelnest mit anhebbarem Dachteil.

Aufgabe der vorliegenden Erfindung ist die Schaffung einer Dachkonstruktion mit der Möglichkeit einer einfachen Belüftung.

Die Aufgabe wird durch eine Dachkonstruktion mit den Merkmalen des Anspruchs 1 gelöst. Die Dachlage ist zumindest teilweise zwischen zwei Positionen bewegbar, nämlich zwischen einer ersten, abgesenkten Position einerseits und einer zweiten, angehobenen Position andererseits, wobei die Dachlage, bzw. ein Teil derselben, in der angehobenen Position gegen ungewolltes Absenken arretierbar ist.

Vorzugsweise ist die Dachlage biegesteif oder sogar verwindungssteif, so dass die Dachlage nur an wenigen Stellen am Rand angehoben werden muss, um in die angehobene Position zu gelangen. Dabei kann die Dachlage auch um eine Achse aufschwenken. Ein vollständiges Anheben der Dachlage insgesamt ist nicht erforderlich. Durch das Anheben der Dachlage bzw. eines Teils derselben können ein oder mehrere Lüftungsspalte gebildet werden. Das Anheben und Absenken kann manuell oder motorisch erfolgen.

Nach einem weiteren Gedanken der Erfindung sind Abstandhalter zum Arretieren der Dachlage oder eines Teils derselben in der angehobenen Position vorgesehen, wobei die Abstandhalter insbesondere mit der Dachlage verbunden sind. Anstelle der Abstandhalter können auch andere Arretierungsmittel vorgesehen sein.

Nach einem weiteren Gedanken der Erfindung wirken die Abstandhalter mit Aufnahmen zusammen. Die Aufnahmen sind vorzugsweise einem an die Dachlage angrenzenden Dachbereich zugeordnet. Der angrenzende Dachbereich ist vorzugsweise feststehend bzw. unbeweglich angeordnet, während die Dachlage vom angrenzenden Dachbereich abhebbar ist. Die Abstandhalter kommen in der angehobenen Position insbesondere teilweise in den Aufnahmen zu liegen.

Erfindungsgemäß können die Abstandhalter durch Umbiegen von Teilbereichen der Dachlage gebildet sein, insbesondere von randseitigen Teilbereichen. Beispielsweise kann die Dachlage aus Blech hergestellt sein. Vorgestanzte Teilbereiche können dann zur Bildung der Abstandhalter umgebogen werden.

Erfindungsgemäß sind die Abstandhalter nach Art von abgestuften Steckern ausgebildet, mit einem breiten Bereich, der nicht in die Aufnahmen passt und mit einem über den breiten Bereich hervorstehenden schmalen Bereich zum Einstecken in eine Aufnahme in der Dachkonstruktion. Der schmale Bereich kann auch spitz zulaufend sein. Der breite Bereich bildet einen Anschlag, so dass die Eindringtiefe des Abstandhalters in die Aufnahme genau definiert ist.

Erfindungsgemäß kann die Dachlage in der angehobenen Position einen Abstand zu einem angrenzenden Dachbereich aufweisen, unter Bildung eines Lüftungsspalts zwischen Dachbereich und Dachlage. Zwischen Dachlage und angrenzendem Dachbereich ist dann ein Luftaustausch mit der Umgebung möglich.

Nach einem weiteren Gedanken der Erfindung können Abstandhalter entlang einer Dachlagenkante angeordnet sein, wobei die Dachlagenkante insbesondere mit Abstand parallel zu einer Firstlinie der Dachkonstruktion verläuft. Die Abstandhalter sind dadurch zumindest beim Anheben der Dachlage gut sichtbar und positionierbar.

Erfindungsgemäß können zwei Dachlagen vorgesehen sein, die ein Satteldach bilden und entlang einer Firstlinie insbesondere biegesteif miteinander verbunden sind. Die Biegesteifigkeit bezieht sich auf den normalen Gebrauch der Dachlagen beim Anheben oder Absenken derselben. Bei der Herstellung und der Verwendung eines entsprechenden Werkstoffs ist die Möglichkeit des Umbiegens im Sinne einer dauerhaften Formgebung eher gewünscht. Vorzugsweise sind die beiden Dachlagen gebildet durch eine gemeinsame Blechlage, die entlang der Firstlinie zur Bildung des Satteldachs gekantet ist.

Erfindungsgemäß können beide Dachlagen entlang ihrer unteren Außenkanten Abstandhalter aufweisen. Auch können an beide Dachlagen, der Firstlinie gegenüberliegend, Dachbereiche angrenzen, wobei die Dachbereiche insbesondere feststehend sind.

Schließlich kann die mindestens eine Dachlage den angrenzenden Dachbereich überlappen und so einen Überlappungsbereich bilden. Bei abgesenkter Dachlage wird so ein Luftaustauch in diesem Bereich wirksam verhindert.

Gegenstand der Erfindung ist auch eine Stallanlage gemäß Anspruch 12, d.h. eine Stallanlage, insbesondere mit einem oder mehreren Legenestern, mit einer erfindungsgemäßen Dachkonstruktion.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1: eine Stallkonstruktion in perspektivischer Darstellung und mit geschlossenem Dach,
- Fig. 2: die Stallkonstruktion gemäß Fig. 1 in Giebelansicht,
- Fig. 3: ein Detail E aus Fig. 2 in vergrößerter Darstellung,
- Fig. 4: die Stallanlage gemäß Fig. 1, jedoch mit geöffnetem, teilweise angehobenen Dach,
- Fig. 5: eine Giebelansicht der Stallanlage gemäß Fig. 4,
- Fig. 6: ein Detail D aus Fig. 5,

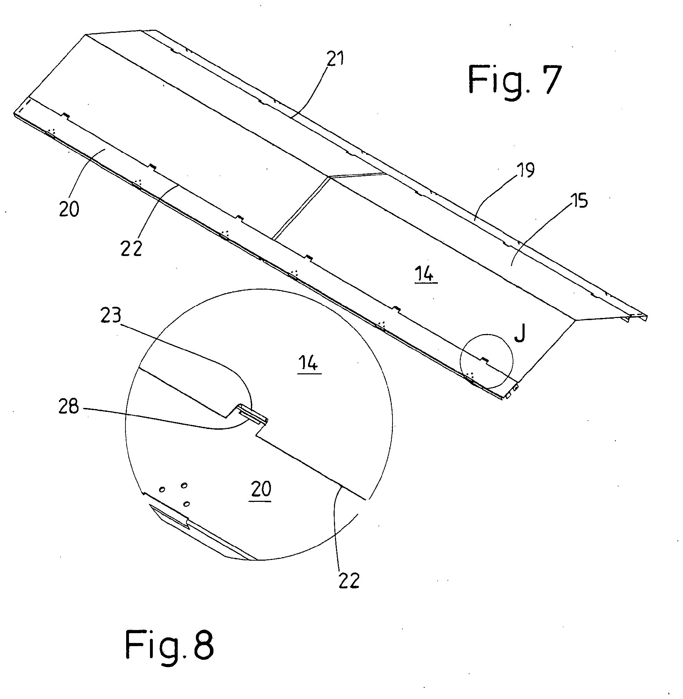

- Fig. 7: ein Teil des geschlossenen Daches aus Fig. 1 in perspektivischer Darstellung,
- Fig. 8: ein Detail J aus Fig. 7 in vergrößerter Darstellung,

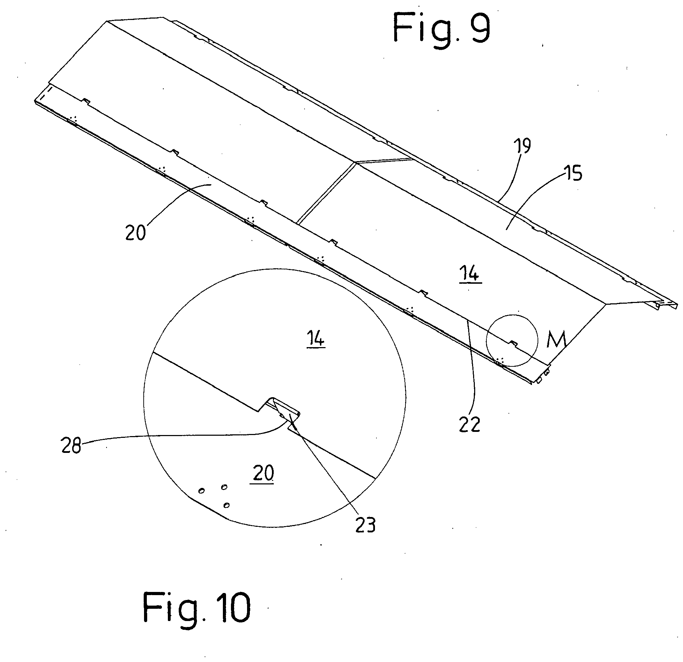

- Fig. 9: den Dach-Teil gemäß Fig. 7 in geöffnetem Zustand,
- Fig. 10: ein Detail M aus Fig. 9 in vergrößerter Darstellung,
- Fig. 11: eine Draufsicht auf den geschlossenen Dach-Teil,
- Fig. 12: einen Querschnitt durch den geschlossenen Dach-Teil gemäß Fig. 11 entlang der Linie F-F,
- Fig. 13: ein Detail G aus Fig. 12 in vergrößerter Darstellung,
- Fig. 14: den geöffneten Dach-Teil in der Draufsicht,
- Fig. 15: den geöffneten Dach-Teil gemäß Fig. 14 im Querschnitt entlang der Linie K-K,
- Fig. 16: ein Detail L aus Fig. 15 in vergrößerter Darstellung,
- Fig. 17: ein aus einem rechteckigen Blechstück gebildetes Satteldachteil in perspektivischer Unteransicht,
- Fig. 18: ein Detail A aus Fig. 17 in vergrößerter Darstellung.

In Fig. 1 ist eine Stallanlage 10 mit zwei Legenestern 11, 12 erkennbar. Die beiden Legenester 11, 12 ruhen auf einem gemeinsamen Unterbau 13, welcher auf Stützbeinen mit Abstand zum Boden steht.

Jedes Legenest 11, 12 weist ein Satteldach mit einer Firstlänge von etwa 125 cm auf, jeweils mit zwei Dachlagen 14, 15 und äußeren Dachklappen 16, 17. Die Dachlagen 14, 15 sind Abschnitte einer gemeinsamen, rechteckigen Abdeckung, welche im Bereich einer Firstlinie 18 abgewinkelt ist, im vorliegenden Beispiel um etwa 125°. Alternativ kann es sich bei den Dachlagen 14, 15 in voneinander unabhängige, biegesteife Teile handeln, die im Bereich der Firstlinie 18 biegesteif miteinander verbunden sind.

Zwischen den Dachlagen 14, 15 einerseits und den Dachklappen 16, 17 andererseits sind Dachstreifen 19, 20 vorgesehen. Diese bilden hier an die Dachlagen 14, 15 angrenzende Dachbereiche und erstrecken sich über beide Legenester 11, 12 parallel zur Firstlinie 18. Durch die Dachstreifen 19, 20 sind die Legenester 11, 12 miteinander verbunden.

Die Dachlagen 14, 15 sind relativ zu den Dachstreifen 19, 20 anhebbar, zum Beispiel manuell. In den Fig. 1 bis 3 ist eine geschlossene Position gezeigt, in den Fig. 4 bis 6 eine angehobene Position. In der geschlossenen Position überlappen die Dachlagen 14, 15 die Dachstreifen 19, 20 geringfügig, siehe insbesondere Fig. 3. In der angehobenen Position werden die Dachlagen 14, 15 mit Abstand oberhalb der Dachstreifen 19, 20 gehalten, siehe insbesondere Fig. 5 und 6.

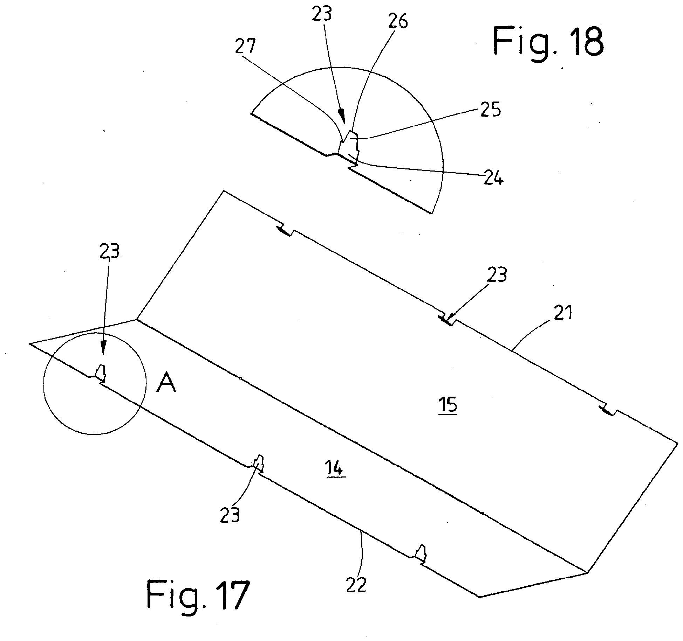

Die Dachlagen 14, 15 weisen jeweils entlang ihrer Unterkanten 21, 22, welche sich parallel zur Firstlinie 18 erstrecken, Abstandhalter 23 auf, die in diesem Beispiel in besonderer Weise hergestellt und ausgebildet sind. Die aus den Dachlagen 14, 15 gebildete Abdeckung besteht hier aus Blech. Im Bereich der Unterkanten 21, 22 sind die Abstandhalter 23 durch Schneiden oder Stanzen und Umbiegen entsprechender Bereiche der Dachlagen 14, 15 geformt. Die äußeren Umrisse der Abstandhalter 23 ergeben sich aus den Fig. 17 und 18. Es handelt sich jeweils um einen Streifen mit einem an die betreffende Dachlage 14, 15 angrenzenden breiten Bereich 24 und einem nach außen daran anschließenden schmalen Bereich 25, welcher außerdem trapezförmig ausgebildet ist mit nach außen, also zu einer Abschlusskante 26 hin abnehmender Breite. Am Übergang zwischen breitem Bereich 24 und schmalerem Bereich 25 ist beidseitig ein Absatz 27 gebildet.

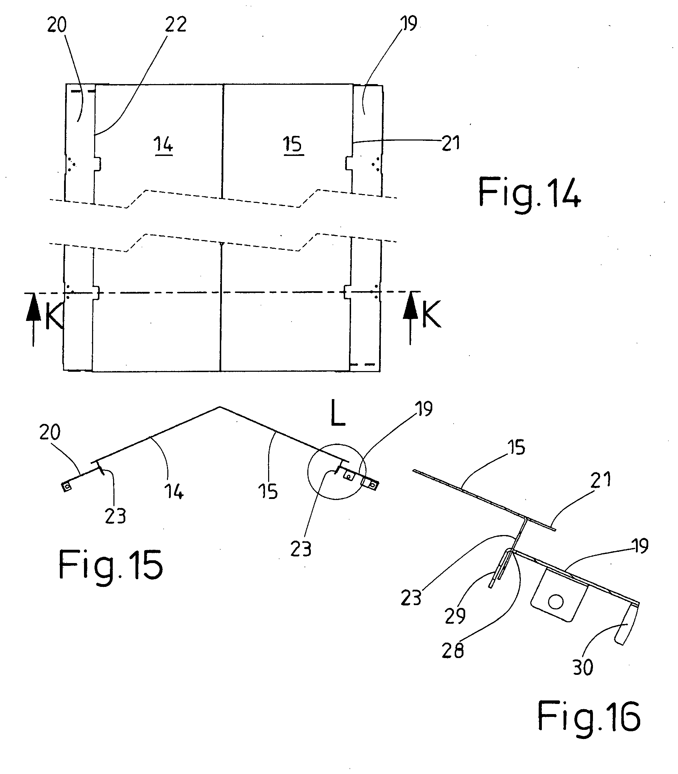

Bei angehobenen Dachlagen 14, 15 stecken die Abstandhalter 23 in hierfür vorgesehenen Aufnahmen, nämlich Schlitzen 28 der Dachstreifen 19, 20, siehe Fig. 16. Dabei liegen die Abstandhalter 23 mit ihren Absätzen 27 auf den Dachstreifen 19, 20 auf. Entsprechend sind die Schlitze 28 so ausgebildet, dass die schmaleren Bereiche 25 der Abstandhalter 23 hineinpassen, nicht jedoch die breiteren Bereiche 24. Durch die angehobenen Dachlagen 14, 15 sind zwischen den Unterkanten 21, 22 und den benachbarten Bereichen der Dachstreifen 19, 20 Lüftungsspalte gebildet.

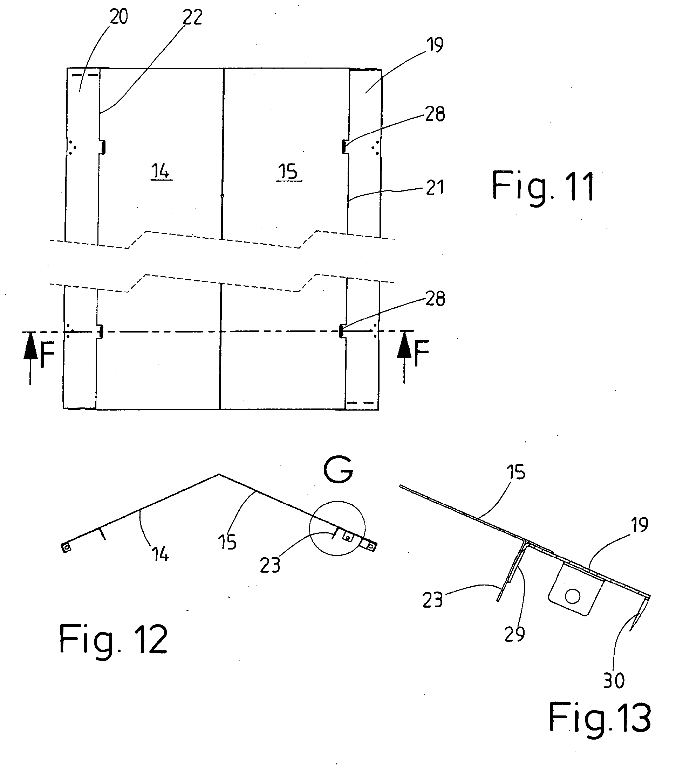

Bei abgesenkten Dachlagen 14, 15 kommen die Abstandhalter 23 außerhalb bzw. oberhalb der Dachstreifen 19, 20 zu liegen, siehe Fig. 13. Zugleich überlappen die Dachlagen 14, 15 die Dachstreifen 19, 20 in einem schmalen Bereich, siehe ebenfalls Fig. 13. Die Dachstreifen 19, 20 sind hier als U-Profile ausgebildet mit seitlichen Schenkeln 29, 30. In der abgesenkten Position der Dachlagen 14, 15 liegen die Abstandhalter 23 jeweils außen am oberen Schenkel 29 an, siehe wiederum Fig. 13.

Die Schlitze 28 sind randnah, nämlich dicht an den oberen Schenkeln 29 angeordnet. Durch diese Positionierung und durch eine aufgrund der Dimensionierung und des verwendeten Werkstoffs vorhandene Nachgiebigkeit der Dachlagen 14, 15 sind die anhand der Fig. 13 und 16 dargestellten verschiedenen Positionen der Dachlagen 14, 15 problemlos einnehmbar. In der Praxis ist es am Einfachsten, wenn die Dachlagen 14, 15 von Hand auf- oder abbewegt werden, da diese Art der Verstellung nicht oft erforderlich ist. Im Wesentlichen wird durch das Anheben der Dachlagen 14, 15 eine bessere Lüftung und Wärmeabfuhr zur Anpassung an klimatische Bedingungen oder andere Temperaturschwankungen durchgeführt.

Die Dachklappen 16, 17 sind im Bereich ihrer an die Dachstreifen 19, 20 angrenzenden Kanten an Scharnieren gelagert (nicht näher gezeigt) und können bei Bedarf aufgestellt werden.

Die Legenester 11, 12 weisen unterhalb der Dachstreifen 19, 20 und Dachklappen 16, 17 im Bereich von Giebelseiten jeweils Wandteile 31, 32 auf. Diese dienen auch als Auflagen für die Dachklappen 16, 17.

Ebenso wie die Dachlagen 14, 15 sind die Dachstreifen 19, 20 vorzugsweise aus Blech hergestellt. Demgegenüber handelt es sich bei den Dachklappen 16, 17 vorzugsweise um Bauelemente aus Sperrholz, ebenso bei den Wandteilen 31, 32.

Eine erfindungsgemäße Stallanlage dient beispielsweise der Haltung von Legehennen oder anderen Tieren, insbesondere kleineren Tieren.

### Bezugszeichenliste:

- 10: Stallanlage
- 11: Legenest
- 12: Legenest
- 13: Unterbau
- 14: Dachlage
- 15: Dachlage
- 16: Dachklappe
- 17: Dachklappe
- 18: Firstlinie
- 19: Dachstreifen
- 20: Dachstreifen
- 21: Unterkante
- 22: Unterkante
- 23: Abstandhalter
- 24: breiter Bereich
- 25: schmalerer Bereich
- 26: Abschlusskante
- 27: Absatz
- 28: Schlitze
- 29: Schenkel
- 30: Schenkel
- 31: Wandteil
- 32: Wandteil

## Patentansprüche

1. Dachkonstruktion für eine Stallanlage (10), insbesondere für Legenester (11, 12), mit mindestens einer Dachlage (14, 15),
wobei letztere zumindest teilweise zwischen zwei Positionen bewegbar ist, nämlich zwischen einer ersten, abgesenkten Position einerseits und einer zweiten, angehobenen Position andererseits,
wobei die Dachlage (14, 15) bzw. ein Teil derselben in der angehobenen Position gegen ungewolltes Absenken arretierbar ist,
wobei Abstandhalter (23) zum Arretieren der Dachlage (14, 15) oder eines Teils derselben in der angehobenen Position vorgesehen sind,
und wobei die Abstandhalter (23) mit Aufnahmen in der Dachkonstruktion zusammenwirken, **dadurch gekennzeichnet, dass** die Abstandhalter (23) nach Art von abgestuften Steckern ausgebildet sind, mit einem breiten Bereich (24), der nicht in die Aufnahme passt, und mit einem über dem breiten Bereich (24) hervorstehenden schmalen Bereich (25) zum Einstecken in die Aufnahme in der Dachkonstruktion.

2. Dachkonstruktion nach Anspruch 1, **dadurch gekennzeichnet, dass** die Abstandhalter (23) mit der Dachlage (14, 15) verbunden sind.

3. Dachkonstruktion nach Anspruch 1 oder 2, **dadurch gekennzeichnet, dass** die Aufnahmen einem an die Dachlage (14, 15) angrenzenden Dachbereich zugeordnet sind.

4. Dachkonstruktion nach Anspruch 1 oder einem der weiteren Ansprüche, **dadurch gekennzeichnet, dass** die Abstandhalter (23) durch Umbiegen von Teilbereichen der Dachlage (14, 15) gebildet sind.

5. Dachkonstruktion nach Anspruch 4, **dadurch gekennzeichnet, dass** die Abstandhalter (23) durch Umbiegen von randseitigen Teilbereichen der Dachlage (14, 15) gebildet sind.

6. Dachkonstruktion nach Anspruch 1 oder einem der weiteren Ansprüche, **dadurch gekennzeichnet, dass** die Dachlage (14, 15) in der angehobenen Position einen Abstand zu einem angrenzenden Dachbereich aufweist, unter Bildung eines Lüftungsspalts zwischen Dachbereich und Dachlage (14, 15).

7. Dachkonstruktion nach Anspruch 1 oder einem der weiteren Ansprüche, **dadurch gekennzeichnet, dass** Abstandhalter (23) entlang einer Dachlagenkante angeordnet sind, wobei die Dachlagenkante insbesondere mit Abstand parallel zu einer Firstlinie (18) verläuft.

8. Dachkonstruktion nach Anspruch 1 oder einem der weiteren Ansprüche, **dadurch gekennzeichnet, dass** zwei Dachlagen (14, 15) vorgesehen sind, die ein Satteldach bilden und entlang einer Firstlinie (18) insbesondere biegesteif miteinander verbunden sind.

9. Dachkonstruktion nach Anspruch 8, **dadurch gekennzeichnet, dass** beide Dachlagen (14, 15) entlang ihrer unteren Außenkanten Abstandhalter (23) aufweisen.

10. Dachkonstruktion nach Anspruch 9, **dadurch gekennzeichnet, dass** an beide Dachlagen (14, 15), der Firstline (18) gegenüberliegend, Dachbereiche angrenzen, wobei die Dachbereiche insbesondere feststehend sind.

11. Dachkonstruktion nach Anspruch 1 oder einem der weiteren Ansprüche, **dadurch gekennzeichnet, dass** die mindestens eine Dachlage (14, 15) einen jeweils angrenzenden Dachbereich überlappt und so einen Überlappungsbereich bildet.

12. Stallanlage (10), insbesondere mit einem oder mehreren Legenestern (11, 12), **gekennzeichnet durch** eine Dachkonstruktion nach einem der voranstehenden Ansprüche.

## Claims

1. Roof construction for a stall installation (10), in particular for laying nests (11, 12), having at least one roof tier (14, 15),
wherein the latter is at least partially movable between two positions, specifically between a first lowered position, on the one hand, and a second raised position, on the other hand,
wherein the roof tier (14, 15), or part of the latter, respectively, in the raised position is lockable against unintentional lowering,
wherein spacers (23) for locking the roof tier (14, 15), or part of the latter, in the raised position are provided, and
wherein the spacers (23) interact with receptacles in the roof construction,
**characterized in that**
the spacers (23) are configured in the manner of stepped plugs, having a wide region (24) which does not fit into the receptacle, and having a narrow region (25), which projects beyond the wide region (24), for plugging into the receptacle in the roof construction.

2. Roof construction according to Claim 1, **characterized in that** the spacers (23) are connected to the roof tier (14, 15).

3. Roof construction according to Claim 1 or 2, **characterized in that** the receptacles are assigned to a roof region that is adjacent to the roof tier (14, 15).

4. Roof construction according to Claim 1 or one of the further claims,
**characterized in that** the spacers (23) are formed by bending part-regions of the roof tier (14, 15).

5. Roof construction according to Claim 4, **characterized in that** the spacers (23) are formed by bending peripheral part-regions of the roof tier (14, 15).

6. Roof construction according to Claim 1 or one of the further claims,
**characterized in that** the roof tier (14, 15) in the raised position, while forming a ventilation gap between the roof region and the roof tier (14, 15), has a spacing from an adjacent roof region.

7. Roof construction according to Claim 1 or one of the further claims,
**characterized in that** spacers (23) are disposed along a roof tier edge, wherein the roof tier edge runs in particular so as to be spaced apart in a parallel manner from a ridge line (18).

8. Roof construction according to Claim 1 or one of the further claims,
**characterized in that** two roof tiers (14, 15) which form a gabled roof and along a ridge line (18) are interconnected in particular in a flexurally rigid manner are provided.

9. Roof construction according to Claim 8, **characterized in that** both roof tiers (14, 15) along the lower external edges thereof have spacers (23).

10. Roof construction according to Claim 9, **characterized in that** roof regions are adjacent to both roof tiers (14, 15) so as to be opposite the ridgeline (18), wherein the roof regions are in particular stationary.

11. Roof construction according to Claim 1 or one of the further claims,
**characterized in that** the at least one roof tier (14, 15) overlaps with a respective adjacent roof region, thus forming an overlap region.

12. Stall installation (10), in particular having one or a plurality of laying nests (11, 12),
**characterized by** a roof construction according to one of the preceding claims.

## Revendications

1. Structure de toit destinée à une installation de stabulation (10), en particulier à des nids de ponte (11, 12), comprenant au moins un panneau de toit (14, 15),
celui-ci étant mobile au moins partiellement entre deux positions, à savoir entre une première position abaissée d'une part et une deuxième position relevée d'autre part,
le panneau de toit (14, 15) ou une partie de celui-ci pouvant être bloqué(e) dans la position relevée de manière à ne pas s'abaisser de manière indésirable,
des éléments d'écartement (23) étant prévus dans la position relevée pour bloquer le panneau de toit (14, 15) ou une partie de celui-ci,
et les éléments d'écartement (23) coopérant avec des logements ménagés dans la structure de toit, **caractérisée en ce que** les éléments d'écartement (23) sont conçus à la manière de fiches en gradins comprenant une partie large (24) qui ne rentre pas dans le logement et une partie étroite (25) faisant saillie de la partie large (24) et destinée à être insérée dans le logement ménagé dans la structure de toit.

2. Structure de toit selon la revendication 1, **caractérisée en ce que** les éléments d'écartement (23) sont reliés au panneau de toit (14, 15).

3. Structure de toit selon la revendication 1 ou 2, **caractérisée en ce que** les logements sont associés à une zone de toit adjacente au panneau de toit (14, 15).

4. Structure de toit selon la revendication 1 ou l'une des autres revendications, **caractérisée en ce que** les éléments d'écartement (23) sont formés par pliage de parties du panneau de toit (14, 15).

5. Structure de toit selon la revendication 4, **caractérisée en ce que** les éléments d'écartement (23) sont formés par pliage de parties en bordure du panneau de toit (14, 15).

6. Structure de toit selon la revendication 1 ou l'une des autres revendications, **caractérisée en ce que** le panneau de toit (14, 15) présente dans la position relevée espacée une distance par rapport à une zone de toit adjacente en ménageant une fente d'aération entre la zone de toit et le panneau de toit (14, 15).

7. Structure de toit selon la revendication 1 ou l'une des autres revendications, **caractérisée en ce que** les éléments d'écartement (23) sont disposés le long d'un bord du panneau de toit, le bord du panneau de toit s'étendant en particulier parallèlement à distance d'une ligne de faîtage (18).

8. Structure de toit selon la revendication 1 ou l'une des autres revendications, **caractérisée en ce que** deux panneaux de toit (14, 15) sont prévus, lesquels forment un toit en selle et sont reliés entre eux, notamment rigidement en flexion, le long d'une ligne de faîtage (18).

9. Structure de toit selon la revendication 8, **caractérisée en ce que** les deux panneaux de toit (14, 15) comportent, le long de leurs bords extérieurs inférieurs, des éléments d'écartement (23).

10. Structure de toit selon la revendication 9, **caractérisée en ce que** des zones de toit, opposées à la première ligne de faîtage (18), sont adjacentes à deux panneaux de toit (14, 15), les zones de toit étant en particulier fixes.

11. Structure de toit selon la revendication 1 ou l'une des autres revendications, **caractérisée en ce que** l'au moins un panneau de toit (14, 15) chevauche une zone de toit adjacente respective et forme ainsi une zone de chevauchement.

12. Installation de stabulation (10), comprenant en particulier au moins un nid de ponte (11, 12), **caractérisée par** une structure de toit selon l'une des revendications précédentes.
